# EUROPÄISCHE PATENTSCHRIFT

(11) **EP 1 183 139 B1**
(45) Veröffentlichungstag und Bekanntmachung des Hinweises auf die Patenterteilung: **30.10.2002**
(21) Anmeldenummer: 00934995.2
(22) Anmeldetag: 10.05.2000
(51) Int. Cl.: B29C 31/00

(54) **VORRICHTUNG ZUM HERSTELLEN VON KUNSTSTOFF-FORMTEILEN**
METHOD FOR PRODUCING MOULDED PARTS CONSISTING OF SYNTHETIC MATERIAL
DISPOSITIF PERMETTANT DE FABRIQUER DES PIECES MOULEES EN PLASTIQUE

(30) Priorität: 12.05.1999 DE 19922164
(43) Veröffentlichungstag der Anmeldung: 06.03.2002
(73) Patentinhaber: Krauss-Maffei Kunststofftechnik GmbH, 80997 München (DE)
(72) Erfinder: BAUER, Adolf, D-82140 Olching (DE)
(74) Vertreter: Zollner, Richard
(86) Internationale Anmeldenummer: EP0004157
(87) Internationale Veröffentlichungsnummer: WO00069611

(56) Entgegenhaltungen:
- US-A- 3 337 662
- US-A- 4 183 883

## Beschreibung

Die Erfindung bezieht sich auf eine Vorrichtung zum Herstellen von Kunststoff-Formteilen, nach dem Oberbegriff des Patentanspruchs 1.

Vorrichtungen dieser Art, wie sie z.B. aus der EP-A1 0 502 378 zum Herstellen von Formfolien aus flocken- oder pulverförmigen Kunststoffmaterialien nach dem Formaufschmelzverfahren (Slush-Verfahren) bekannt sind, enthalten einen zweiteiligen aus einem Pulverkasten und einer nacheinander beheizten und gekühlten Formschale bestehenden Formbehälter, der während des Aufschmelzprozesses zur Erzielung einer gleichförmigen Foliendicke und einer hochwertigen Oberflächenqualität, vor allem bei verwickelten Raumformen, um zwei senkrecht zueinander stehende Achsen hin- und hergehend gedreht und zusatzlich in Richtung der einen Drehachse oszillierend bewegt werden muß. Zu diesem Zweck ist der Formbehälter linear begrenzt verschieblich in einem Tragrahmen gelagert, welcher seinerseits über endseitige Lagerstellen um die Längsachse drehbar angetrieben und mit Hilfe von individuell steuerbaren Hubzylindern, durch die die Lagerstellen selektiv angehoben und abgesenkt werden, gemeinsam mit dem Formbehälter um eine zur Längsachse senkrechte Schwenkachse verkippt wird. Eine solche Schwenkkinematik ist jedoch von komplizierter, konstruktiv aufwendiger Bauweise, benötigt leistungsstarke Hubantriebe und hat den weiteren Nachteil, daß die Schwenkbewegung des Formbehälters nur innerhalb eines begrenzten Winkelbereichs möglich ist, auf eine biaxial voll drehbare Aufhängung des Formbehälters hingegen, obschon verfahrenstechnisch erwünscht, verzichtet werden muß.

Aufgabe der Erfindung ist es, bei einer Vorrichtung der eingangs genannten Art auf baulich einfache Weise und unter Verringerung der bewegten Massen eine biaxial voll drehbare und in Richtung einer Achse oszillierend bewegliche Lagerung des Formbehälters zu erzielen.

Diese Aufgabe wird erfindungsgemäß durch die im Patentanspruch 1 gekennzeichnete Vorrichtung gelöst.

Die erfindungsgemäße Vorrichtung verfügt aufgrund der beanspruchten Gelenkverbindungen über eine konstruktiv sehr einfache, biaxial drehbare und zugleich linear bewegliche Aufhängung des Formbehälters, wobei an den Linearbewegungen und den Drehbewegungen um die Schwenkachse nur der Formbehälter, nicht aber der Tragrahmen teilnimmt, so daß die dabei bewegten Massen und dementsprechend auch die Belastungen der zugehörigen Lagerstellen und Antriebe gering gehalten werden, mit dem weiteren Effekt, daß sich bei der erfindungsgemäßen Vorrichtung problemlos eine uneingeschränkte Drehbarkeit des Formbehälters um beide Achsen realisieren läßt.

Um den Bewegungsablauf in allen drei Freiheitsgraden des Formbehälters individuell variieren zu können, sind der Schwenkantrieb und der Linearantrieb für den Formbehälter sowie der Rotationsantrieb für den Tragrahmen nach Anspruch 2 zweckmäßigerweise jeweils unabhängig voneinander steuerbar.

In besonders bevorzugter Weise enthält der Formbehälter nach Anspruch 3 zwei voneinander getrennte, symmetrisch zur Schwenkachse angeordnete Forminnenräume, wodurch die Fertigungskapazität der Vorrichtung auf einfache Weise verdoppelt wird.

Die Erfindung wird nunmehr anhand eines Ausführungsbeispiels in Verbindung mit den Zeichnungen näher erläutert. Es zeigen in stark schematisierter Darstellung:

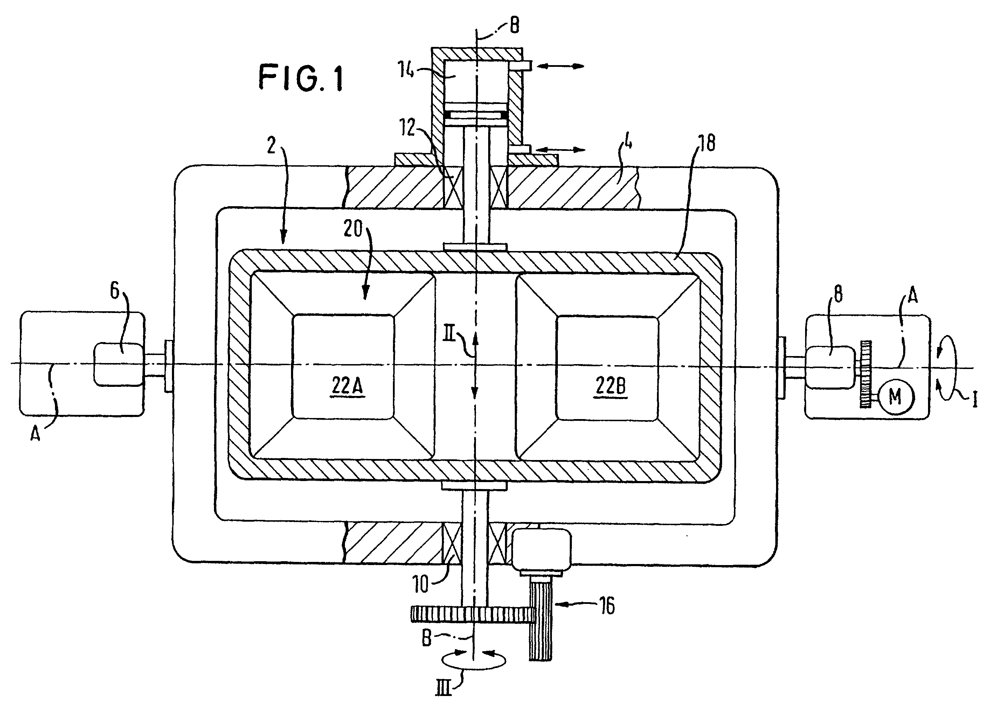

- **Fig. 1**: die Aufsicht einer Vorrichtung nach der Erfindung zum Herstellen von Formfolien aus thermoplastischem, flockenförmigem Kunststoffpulver nach dem Formaufschmelzverfahren; und
- **Fig. 2**: eine teilweise geschnittene Seitenansicht der Vorrichtung nach Fig. 1.

Die in den Fig. gezeigte Vorrichtung zum Herstellen von Formfolien, z.B. Armaturentafeln von Kraftfahrzeugen, aus thermoplastischem, flocken- oder pulverförmigem Kunststoffmaterial im Wege des Slush-Verfahrens enthält einen in drei Freiheitsgraden beweglich aufgehängten und individuell steuerbaren Formbehälter 2, der in einem Tragrahmen 4 gelagert ist, welcher über endseitige Lagerstellen 6, 8 um eine horizontale Rotationsachse A drehbar abgestützt und mittels eines Motors M in Drehrichtung (Pfeilrichtung I) angetrieben ist.

Eine voll drehbare Lagerung des Formbehälters 2 um eine zweite, zur Rotationsachse A senkrechte Achse B, kombiniert mit einer translatorisch begrenzt verschieblichen Aufhängung wird durch jeweils seitlich zwischen Formbehälter 2 und Tragrahmen 4 angeordnete Dreh-Schiebegelenke 10, 12 bewirkt, denen einerseits ein Linearantrieb in Form eines umsteuerbaren hydraulischen Stellantriebs 14 für eine oszillierende Hubbewegung in Pfeilrichtung II und andererseits ein Drehantrieb 16 für eine Schwenkbewegung (Pfeilrichtung III) des Formbehälters 2 bezüglich des Tragrahmens 4 zugeordnet ist. Die Antriebe 14, 16 und M sind unabhängig voneinander steuerbar.

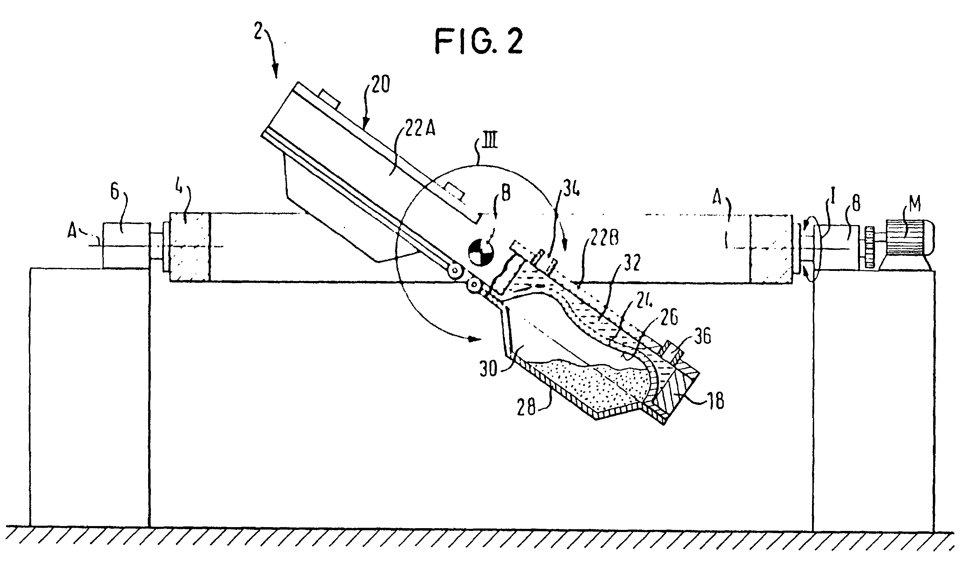

Der Formbehälter 2 selbst besteht aus einem an einem Innenrahmen 18 befestigten Formwerkzeug 20, welches aus Gründen einer erhöhten Fertigungskapazität zwei symmetrisch zur Schwenkachse B angeordnete Formabschnitte 22A und 22B aufweist. Jeder Formabschnitt 22A, B enthält eine dünnwandige, galvanoplastisch hergestellte Formschale 24 mit einer der Kontur des herzustellenden Formteils entsprechenden Formfläche 26 (Fig. 2), die gemeinsam mit einem lösbar am Formbehälter 2 befestigten Pulverkasten 28 den Forminnenraum 30 begrenzt. Im Bereich der Formabschnitte 22A und 22B ist das Formwerkzeug 20 doppelwandig ausgebildet, und der so gebildete Hohlraum 32 auf der Rückseite der Formschale 24 ist mit Ein- und Auslaßstutzen 34, 36 für ein Kühl- und ein Heizmedium, vorzugsweise Öl, versehen, durch das die Formfläche 26 während des Herstellungsprozesses in wechselnder Folge beheizt und gekühlt wird.

Im Betrieb wird zunächst der Pulverkasten 28 gelöst und mit dem Kunststoffinaterial befüllt und anschließend der Forminnenraum 30 durch den Pulverkasten 28 verschlossen, woraufhin der Formbehälter 2 programmgesteuert um die beiden Drehachsen A und B jeweils mehrmals in der einen und dann in der anderen Richtung gedreht und in Richtung der Schwenkachse B oszillierend hin- und herbewegt wird. Gleichzeitig wird die auf diese Weise mit Kunststoffflocken berieselte Formfläche 26 beheizt, so daß das Kunststoffmaterial dort schichtweise und mit gleichmäßiger Schichtdicke aufschmilzt. Nachfolgend wird der Hohlraum 32 mit Kühlmedium beschickt, so daß die an der Formfläche 26 aufgeschmolzene Kunststoffschicht zu einer Formfolie erstarrt, die nach dem Entfernen des Pulverkastens 28 aus dem Formbehälter 2 entnommen wird.

## Patentansprüche

1. Vorrichtung zum Herstellen von Kunststoff-Formteilen, insbesondere von Formfolien aus thermoplastischen Kunststoffflocken nach dem Slush-Verfahren, mit einem Formbehälter (2) mit mindestens einem mit dem Kunststoffmaterial befüllbaren Forminnenraum (30) einschließlich einer in wechselnder Abfolge heiz- und kühlbaren Formfläche (26) sowie mit einem um eine Rotationsachse (A) angetriebenen Tragrahmen (4) für den Formbehälter (2),
**gekennzeichnet durch**
eine kombinierte, zwischen Tragrahmen (4) und Formbehälter (2) wirksame Schwenk-Schiebeverbindung (10, 12), über die der Formbehälter am Tragrahmen um eine senkrecht zur Rotationsachse (A) des Tragrahmens verlaufende Schwenkachse (B) drehbar und in Richtung der Schwenkachse oszillierend beweglich gelagert ist.

2. Vorrichtung nach Anspruch 1,
**dadurch gekennzeichnet, daß**
der Schwenkantrieb (16) und der Linearantrieb (14) für den Formbehälter (2) sowie der Rotationsantrieb (M) für den Tragrahmen (4) jeweils unabhängig voneinander steuerbar sind.

3. Vorrichtung nach Anspruch 1 oder 2,
**dadurch gekennzeichnet, daß**
der Formbehälter (2) zwei voneinander getrennte, symmetrisch zur Schwenkachse (B) angeordnete Forminnenräume (30) enthält.

## Claims

1. Apparatus for producing plastics mouldings, in particular moulded films consisting of thermoplastic polymer flakes, by the slush process comprising a mould container (2) with at least one mould cavity (30) fillable with the plastics material and including a mould face (26) which can be heated and cooled alternately and comprising a supporting frame (4), driven round an axis of rotation (A), for the mould container (2), **characterised by** a combined pivot and slide connection (10, 12) which acts between supporting frame (4) and mould container (2) and by means of which the mould container is mounted on the supporting frame so as to be rotatable about a pivot axis (B) extending perpendicularly to the axis of rotation (A) of the supporting frame and movable in an oscillating manner in the direction of the pivot axis.

2. Apparatus according to claim 1, **characterised in that** the pivot drive (16) and the linear drive (14) for the mould container (2) as well as the rotary drive (M) for the supporting frame (4) may be controlled independently of one another in each case.

3. Apparatus according to claim 1 or 2, **characterised in that** the mould container (2) contains two mutually separated mould cavities (30) arranged symmetrically to the pivot axis (B).

## Revendications

1. Dispositif pour fabriquer des pièces moulées en plastique, en particulier des films moulés à base de flocons de plastique thermoplastiques selon le procédé de Slush, avec un récipient de moulage (2) pourvu d'au moins une cavité intérieure de moulage (30) pouvant être remplie du matériau plastique, y compris une surface de moulage (26) pouvant être chauffée et refroidie dans une succession alternée et d'un cadre porteur (4) entraîné autour d'un axe de rotation (A) pour le récipient de moulage (2), **caractérisé par** :
un dispositif basculant et coulissant (10, 12) mixte, actif entre le cadre porteur (4) et le récipient de moulage (2), par lequel le récipient de moulage est monté sur le cadre porteur de façon tourner autour d'un axe de pivotement (B) perpendiculaire à l'axe de rotation du cadre porteur et de façon mobile et oscillante en direction de l'axe de pivotement.

2. Dispositif selon la revendication 1, **caractérisé en ce que** :
la commande de pivotement (16) et la commande de déplacement linéaire (14) pour le récipient de moulage (2) et la commande de rotation (M) pour le cadre porteur peuvent être contrôlées à chaque fois indépendamment l'une de l'autre.

3. Dispositif selon la revendication 1 ou 2, **caractérisé en ce que** :
le récipient de moulage (2) contient deux cavités intérieures de moulage (30) séparées l'une de l'autre et disposées de façon symétrique par rapport à l'axe de basculement (B).
